# EUROPEAN PATENT SPECIFICATION

(11) **EP 2 398 619 B1**
(45) Date of publication and mention of the grant of the patent: **06.01.2016**
(21) Application number: 10744022.4
(22) Date of filing: 17.02.2010
(51) Int. Cl.: B23D 77/00, B23D 27/00, B23C 5/00, B23B 41/04, B23D 43/06

(54) **REAMING TOOL WITH A GUIDE ARRANGEMENT**
REIBWERKZEUG MIT EINER FÜHRUNGSANORDNUNG
OUTIL D'ALÉSAGE AVEC UN AGENEMENT DE GUIDE

(30) Priority: 20.02.2009 SE 0950096
(43) Date of publication of application: 28.12.2011
(73) Proprietor: Seco Tools AB, SE-737 82 Fagersta (SE)
(72) Inventor: RIMET, Lilian, F-38160 Saint Sauveur (FR)
(74) Representative: Hammarsjö, Joakim
(86) International application number: PCT/SE2010/050179
(87) International publication number: WO 2010/096005

(56) References cited:
- WO-A1-00/76702
- WO-A1-2008/123220
- DD-A1- 143 046
- DE-A1- 2 541 423
- US-A- 1 407 560
- US-A- 2 334 795
- US-A- 3 751 177
- US-A- 3 751 177
- US-A- 3 966 349
- US-A- 3 966 349
- US-A- 4 133 399

## Description

### BACKGROUND AND SUMMARY

The present invention relates generally to cutting tools and, more particularly, to reaming tools having guide arrangements.

To produce holes with good quality in terms of geometry and size, it is often necessary to use tools such as reamers. Reamers are very precise tools with two main functions combined; a cutting function and a guiding function. Reamers typically have cutting edges to perform the cutting function and guides such as land margins on cutting inserts or discrete guide pads to guide the tool in the hole produced by the reamer. Many reamers braze cutting inserts and guide pads to a tool body.

Recently, reamers with indexable inserts have been introduced wherein the inserts have no land margins. These reamers can be subject to problems with vibration during reaming. It is desirable to provide a rotating tool, such as a reaming tool, with a guide arrangement. It is further desirable to provide a rotating tool, such as a reaming tool, with a guide arrangement that does not require the presence of insert land margins to properly guide the tool. WO 2008/123220 A1 discloses a deep hole cutting apparatus attached with a tip-replaceable guide pad on a cutting head portion. US 2,334,795, on which the preamble of claim 1 is based, shows a boring bar with a cutter head having a plurality of cutters thereon, and a separately mounted cutter pilot including a pad axially behind the cutter head.

According to an aspect of the present invention, a reaming tool with a guide arrangement, comprising a tool body having a cutting edge and a recess for the guide arrangement, the tool body having a longitudinal axis, the guide arrangement disposed in the recess for the guide arrangement, the guide arrangement comprising a pad having a guide surface and a hole extending from a first surface of the pad to a second surface of the pad, a clamping member having a small end and a large end, the large end contacting a clamping surface of the hole proximate the first surface of the pad and the small end extending through the hole and beyond the second surface of the pad, and a resilient member is disposed on a surface of the pad opposite the guide surface. The resilient member comprises a ring and that the ring is disposed around a portion of the small end of the clamping member extending beyond the second surface of the pad, and at least parts of the guide arrangement and the cutting edge are disposed on the tool body in positions that, relative to the longitudinal axis, overlap.

### BRIEF DESCRIPTION OF THE DRAWINGS

The features and advantages of the present invention are well understood by reading the following detailed description in conjunction with the drawings in which like numerals indicate similar elements and in which:
FIG. 1A is a perspective view of a cutting tool according to an aspect of the present invention, and FIG. 1B is an enlarged view of portion of FIG. 1A;
FIG. 2 is a partially cross-sectional view of a portion of a cutting tool according to an embodiment of the present invention; and
FIG. 3A is a perspective view of a cutting tool according to an aspect of the present invention, and FIG. 3B is an enlarged view of portion of FIG. 3A.

### DETAILED DESCRIPTION

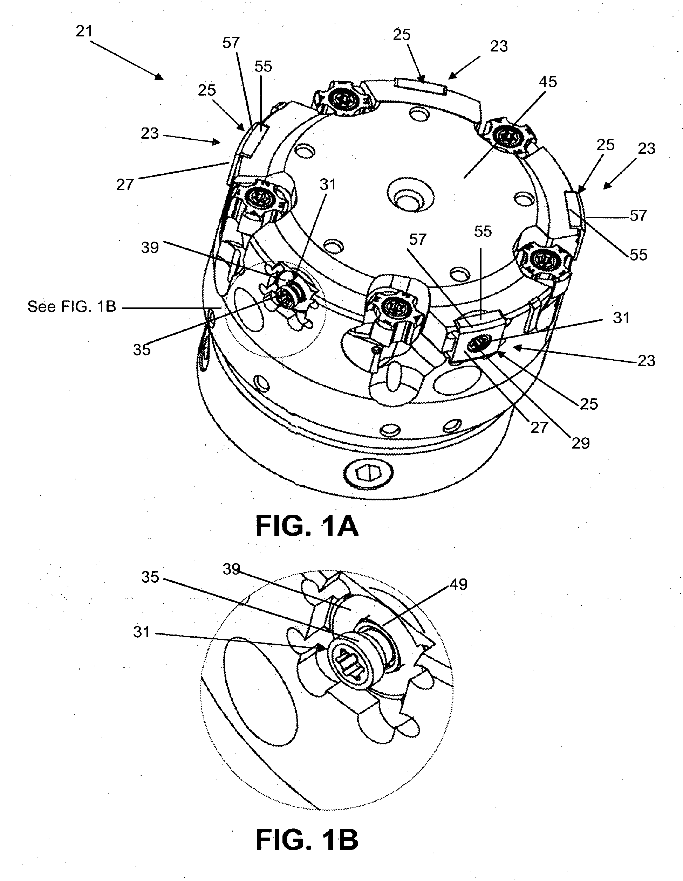

A cutting tool 21 including a guide arrangement 23 is shown in FIGS. 1A-3B. The cutting tool 21 can be any form of rotating tool, however, it is believed that the application has particular application in reaming tools. The guide arrangement 23 includes a pad 25 having a guide surface 27 and a hole 29 extending from a first surface of the pad to a second surface of the pad.

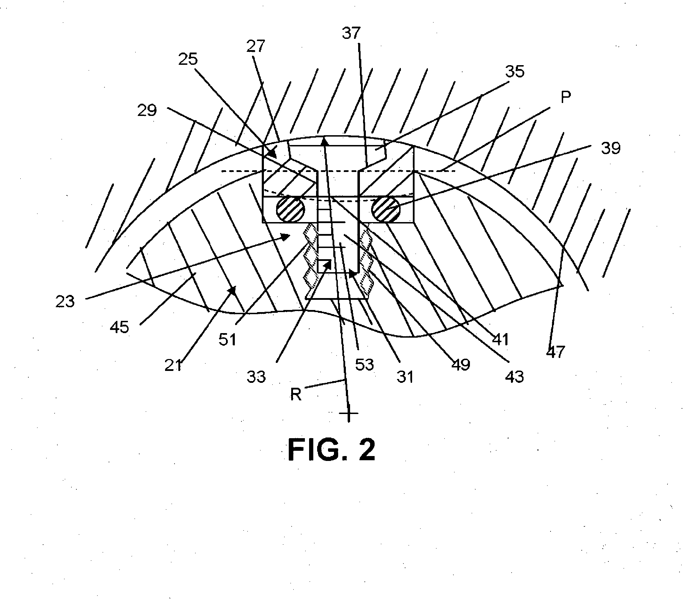

The guide arrangement 23 further comprises a clamping member 31 having a small end 33 (FIG. 2) and a large end 35. Ordinarily, the clamping member 31 will be a structure such as a bolt, a screw, or a pin having an enlarged head portion. The large end 35 contacts a clamping surface 37 (FIG. 2) of the hole 29 proximate the first surface of the pad 25 and the small end extends through the hole and beyond the second surface of the pad.

The guide arrangement 23 further comprises a resilient member 39 disposed on a surface 41 (FIG. 2) of the pad opposite the guide surface 27. Ordinarily, the guide surface 27 is on the first surface of the pad 25, and the resilient member 39 is disposed on the second surface of the pad, i.e., the surface 41 opposite the guide surface 27. The resilient member 39 can comprise a structure such as a compressible, rubber ring that is adapted to be disposed around a portion 43 of the small end 33 of the clamping member 31 extending beyond the second surface (here, the surface 41 opposite the guide surface 27) of the pad 25.

By providing a resilient member 39 on a surface 41 of the pad 25 opposite the guide surface 27, when the resilient member is compressed by a force on the guide surface, the resilient member will apply an opposing force on the surface opposite the guide surface so that the guide surface will be urged into contact with the wall of the hole being, e.g., reamed. In this way, the resilient member 39 facilitates maintaining contact between the guide surface 27 and the surface of the hole, thereby minimizing vibration of the tool relative to the workpiece 47 (FIG. 2). In addition, by providing the resilient member 39 in the form of an O-ring between the body 45 of the tool 21 and the opposite surface 41 of the pads 25, a substantially balanced force can be applied to the opposite surface so that the guide surfaces 27 will be properly oriented relative to the body of the tool. Where several guide arrangements 23 are provided around the circumference of the tool 21, the tool can be "self centering" in the sense that substantially balanced force is applied over the opposite surface 41 of the several pads 25 so that the guide surfaces 27 will automatically tend to properly position the tool relative to the wall of the workpiece.

As shown in phantom in FIG. 2, the first surface and the second surface (here the guide surface 27 and the surface 41 opposite the guide surface) of the pad 25 can be identical. The hole 29 can be symmetrical about a central plane P of the pad 25 perpendicular to an axis of the hole. In this way, the pad 25 can be indexable to at least two positions by flipping it over, such as when damage to one side of the pad occurs.

The pad 25 is ordinarily rectangular and, more particularly, square, when viewed along the axis of the hole 29. As seen, for example, in FIG. 2, the guide surface 27 is ordinarily curved, usually having a radius R substantially equal to or slightly less than a radius of a hole in the workpiece 47 to be cut by the cutting tool. The resilient member 39 typically comprises a ring having a diameter equal to or, typically, slightly smaller than a length of any edge of the pad 25.

As seen, for example, in FIG. 2, a thread 49 such as a thread insert of the type HELICOIL® can be disposed around the portion 43 of the small end 33 of the clamping member 31 extending beyond the second surface of the pad 25. The thread 49 is disposed in a hole 51 in the body 45 of the tool 21. The hole 51 may have an internal thread to mate with the exterior of the thread insert. The small end 33 of the clamping member 31 can have an external thread 53 that mates with the interior of the thread 49.

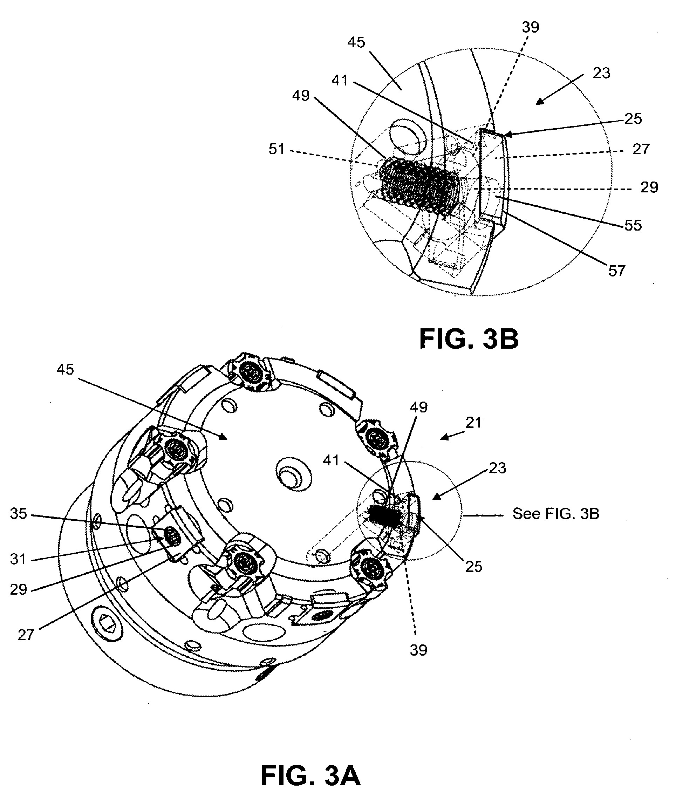

The guide surface 27 defines a circumferential guide surface, i.e., a guide surface defining the limits of the circumference of the tool as it rotates about its axis of rotation. As seen in FIGS. 1A-1B and 3A-3B, the pad 25 can also comprise an edge surface 55 between the circumferential guide surface 27 and the opposite surface 41. The edge surface 55 can comprise an axial guide surface, such as when the pad 25 is disposed at an axial end of the tool. A chamfer 57 can be provided between the circumferential guide surface 27 and the axial guide surface formed by the edge surface 55. The ability of the pad 25 to float relative to the body 47 of the tool 21 along the axis of the clamping member 31 can provide for some ability of the pad to float transverse to the axis of the clamping member. The pad 25 can have two identical edge surfaces 55 on opposite sides of the pad so that, if one edge surface is worn or damaged, the pad can be indexed to use the other edge surface.

While this invention has been illustrated and described in accordance with a preferred embodiment, it is recognized that variations and changes may be made therein without departing from the invention as set forth in the claims.

## Claims

1. A reaming tool (21) with a guide arrangement (23), comprising:
a tool body (45) comprising a cutting edge and a recess for the guide arrangement, the tool body having a longitudinal axis;
the guide arrangement disposed in the recess for the guide arrangement, the guide arrangement comprising
a pad (25) having a guide surface (27) and a hole (29) extending from a first surface of the pad (25) to a second surface of the pad (25),
a clamping member (31) having a small end (33) and a large end (35), the large end (35) contacting a clamping surface (37) of the hole (29) proximate the first surface of the pad (25) and the small end (33) extending through the hole (29) and beyond the second surface of the pad (25), and
a resilient member (39) is disposed on a surface (41) of the pad (25) opposite the guide surface (27),
**characterized in that** the resilient member (39) comprises a ring and that the ring is disposed around a portion (43) of the small end (33) of the clamping member (31) extending beyond the second surface of the pad (25), and **in that** the recess, and **in that** at least parts of the guide arrangement and the cutting edge are disposed on the tool body in positions that, relative to the longitudinal axis, overlap.

2. The reaming tool (21) with the guide arrangement (23) as set forth in claim 1, **characterized in that** the guide surface (27) is on the first surface of the pad (25).

3. The reaming tool (21) with the guide arrangement (23) as set forth in claim 1, **characterized in that** the resilient member (39) is disposed on the second surface of the pad (25).

4. The reaming tool (21) with the guide arrangement (23) as set forth in claim 1, **characterized in that** the first surface and the second surface of the pad (25) are identical, and the hole (29) is symmetrical about a central plane (P) of the pad (25) perpendicular to an axis of the hole (29), such that the pad (25) is indexable to at least two positions.

5. The reaming tool (21) with the guide arrangement (23) as set forth in claim 1, **characterized in that** the pad (25) is rectangular when viewed along an axis of the hole (29).

6. The reaming tool (21) with the guide arrangement (23) as set forth in claim 5, **characterized in that** the guide surface (27) is curved.

7. The reaming tool (21) with the guide arrangement (23) as set forth in claim 6, **characterized in that** the guide surface (27) has a radius (R) substantially equal to a radius of a hole (29) to be cut by the cutting tool (21).

8. The reaming tool (21) with the guide arrangement (23) as set forth in claim 7, **characterized in that** the resilient member (39) comprises a ring having a diameter smaller than a length of any edge of the pad (25).

9. The reaming tool (21) with the guide arrangement (23) as set forth in claim 1, **characterized in that** the guide arrangement comprises a thread (49) disposed around at least a portion (43) of the small end (33) of the clamping member (31) extending beyond the second surface of the pad (25).

10. The reaming tool (21) with the guide arrangement (23) as set forth in claim 9, **characterized in that** the portion of the small end (33) of the clamping member (31) comprises an external thread that mates with the thread (49).

11. The reaming tool (21) with the guide arrangement (23) as set forth in claim 1, **characterized in that** the guide surface (27) defines a circumferential guide surface, the pad (25) comprising an edge surface (55) between the circumferential guide surface and the opposite surface (41), the edge surface comprising an axial guide surface.

12. The reaming tool (21) with the guide arrangement (23) as set forth in claim 11, **characterized in that** the pad (25) comprises a chamfer (57) between the circumferential guide surface and the axial guide surface.

## Patentansprüche

1. Räumwerkzeug (21) mit einer Führungsanordnung (23), welches aufweist:
einen Werkzeugkörper (45), der eine Schneidkante und eine Aussparung für die Führungsanordnung aufweist, wobei der Werkzeugkörper eine Längsachse hat,
die Führungsanordnung in der Aussparung für die Führungsanordnung angeordnet ist, wobei die Führungsanordnung aufweist:
einen Block (25), der eine Führungsfläche (27) und eine Bohrung (29) hat, welche sich von einer ersten Fläche des Blockes (25) zu einer zweiten Fläche des Blockes (25) erstreckt,
ein Klemmelement (31), dass ein kleines Ende (33) und ein großes Ende (35) hat, wobei das große Ende (35) mit einer Klemmfläche (37) der Bohrung (29) in Kontakt tritt, die nahe der ersten Fläche des Blockes (25) liegt und das kleine Ende (33) sich durch die Bohrung (29) und über die zweite Fläche des Blockes (25) hinaus erstreckt, und
ein nachgiebiges Teil (39), welches auf einer Oberfläche (41) des Blockes (45) gegenüber der Führungsfläche (27) angeordnet ist,
**dadurch gekennzeichnet, dass** das nachgiebige Teil (39) einen Ring aufweist und dass der Ring um einen Abschnitt (43) des kleinen Endes (33) des Klemmelementes (31) angeordnet ist, das sich über die zweite Fläche des Blockes (65) hinaus erstreckt, und dass die Aussparung und zumindest Teile der Führungsanordnung und die Schneidkante an dem Werkzeugkörper in Positionen angeordnet sind, die bezogen auf die Längsachse überlappen.

2. Räumwerkzeug (21) mit Führungsanordnung (23) nach Anspruch 1, **dadurch gekennzeichnet, dass** die Führungsfläche (27) auf der ersten Fläche des Blockes (25) liegt.

3. Räumwerkzeug (21) mit Führungsanordnung (23) nach Anspruch 1, **dadurch gekennzeichnet, dass** das nachgiebige Teil (39) an der zweiten Fläche des Blockes (25) angeordnet ist.

4. Räumwerkzeug (21) mit Führungsanordnung (23) nach Anspruch 1, **dadurch gekennzeichnet, dass** die erste Fläche und die zweite Fläche des Blockes (25) identisch sind und dass die Bohrung bezüglich einer zentralen Ebene (P) des Blockes (25), welche senkrecht zu einer Achse der Bohrung (29) verläuft, symmetrisch ist, sodass der Block (25) in zumindest zwei Position indexierbar ist.

5. Räumwerkzeug (21) mit Führungsanordnung (23) nach Anspruch 1, **dadurch gekennzeichnet, dass** der Block (25) in einer Draufsicht entlang der Achse der Bohrung (29) rechtwinklig ist.

6. Räumwerkzeug (21) mit Führungsanordnung (23) nach Anspruch 5, **dadurch gekennzeichnet, dass** die Führungsfläche (27) gekrümmt ist.

7. Räumwerkzeug (21) mit Führungsanordnung (23) nach Anspruch 6, **dadurch gekennzeichnet, dass** die Führungsfläche (27) einen Radius (R) hat, der im Wesentlichen gleich dem Radius einer Bohrung (29) ist, welche durch das Schneidwerkzeug (21) geschnitten werden soll.

8. Räumwerkzeug (21) mit Führungsanordnung (23) nach Anspruch 7, **dadurch gekennzeichnet, dass** das nachgiebige Teil (39) einen Ring aufweist, der einen Durchmesser hat, welcher kleiner als die Länge jeder Kante des Blockes (25) ist.

9. Räumwerkzeug (21) mit Führungsanordnung (23) nach Anspruch 1, **dadurch gekennzeichnet, dass** die Führungsanordnung ein Gewinde (49) aufweist, welches um zumindest einen Abschnitt (43) des kleinen Endes (33) des Klemmelementes (31) herum angeordnet ist, welches sich über die zweite Fläche des Blockes (25) hinaus erstreckt.

10. Räumwerkzeug (21) mit Führungsanordnung (23) nach Anspruch 9, **dadurch gekennzeichnet, dass** der Abschnitt des kleinen Endes (33) des Klemmelementes (31) ein Außengewinde aufweist, das zu dem Gewinde (49) passt.

11. Räumwerkzeug (21) mit Führungsanordnung (23) nach Anspruch 1, **dadurch gekennzeichnet, dass** die Führungsfläche (27) eine umlaufende Führungsfläche definiert, wobei der Block (25) eine Randfläche (55) zwischen der umlaufenden Führungsfläche und der entgegengesetzten Fläche (21) aufweist, wobei die Randfläche eine axiale Führungsfläche aufweist.

12. Räumwerkzeug (21) mit Führungsanordnung (23) nach Anspruch 11, **dadurch gekennzeichnet, dass** der Block (25) eine Abschrägung (57) zwischen der umlaufenden Führungsfläche und der axialen Führungsfläche aufweist.

## Revendications

1. Outils d'alésage (21) avec un agencement de guide (23), comprenant :
un corps d'outil (45) comprenant une arête coupante et un évidement pour l'agencement de guide, le corps d'outil ayant un axe longitudinal,
l'agencement de guide étant disposé dans l'évidement pour l'agencement de guide, l'agencement de guide comprenant
une plaquette (25) ayant une surface de guidage (27) et un trou (29) s'étendant à partir d'une première surface de la plaquette (25) jusqu'à une deuxième surface de la plaquette (25),
un élément de serrage (31) ayant une petite extrémité (33) et une grande extrémité (35), la grande extrémité (35) étant en contact avec une surface de serrage (37) du trou (29) à proximité de la première surface de la plaquette (25) et la petite extrémité (33) s'étendant à travers le trou (29) et au-delà de la deuxième surface de la plaquette (25), et
un élément résilient (39) est disposé sur une surface (41) de la plaquette (25) opposée à la surface de guidage (27),
**caractérisé en ce que** l'élément résilient (39) comprend un anneau et **en ce que** l'anneau est disposé autour d'une partie (43) de la petite extrémité (33) de l'élément de serrage (31) s'étendant au-delà de la deuxième surface de la plaquette (25), et **en ce que** l'évidement, et **en ce qu'**au moins des parties de l'agencement de guide et l'arête coupante sont disposées sur le corps d'outil à des positions qui, par rapport à l'axe longitudinal, se chevauchent.

2. Outil d'alésage (21) avec l'agencement de guide (23) selon la revendication 1, **caractérisé en ce que** la surface de guidage (27) se trouve sur la première surface de la plaquette (25).

3. Outil d'alésage (21) avec l'agencement de guide (23) selon la revendication 1, **caractérisé en ce que** l'élément résilient (39) est disposé sur la deuxième surface de la plaquette (25).

4. Outil d'alésage (21) avec l'agencement de guide (23) selon la revendication 1, **caractérisé en ce que** la première surface et la deuxième surface de la plaquette (25) sont identiques, et le trou (29) est symétrique par rapport à un plan central (P) de la plaquette (25) perpendiculaire à un axe du trou (29), de sorte que la plaquette (25) puisse être indexée sur au moins deux positions.

5. Outil d'alésage (21) avec l'agencement de guide (23) selon la revendication 1, **caractérisé en ce que** la plaquette (25) est rectangulaire lorsqu'elle est observée le long d'un axe du trou (29).

6. Outil d'alésage (21) avec l'agencement de guide (23) selon la revendication 5, **caractérisé en ce que** la surface de guidage (27) est incurvée.

7. Outil d'alésage (21) avec l'agencement de guide (23) selon la revendication 6, **caractérisé en ce que** la surface de guidage (27) a un rayon (R) sensiblement égal à un rayon d'un trou (29) devant être découpé par l'outil de coupe (21).

8. Outil d'alésage (21) avec l'agencement de guide (23) selon la revendication 7, **caractérisé en ce que** l'élément résilient (39) comprend un anneau ayant un diamètre plus petit qu'une longueur de n'importe quelle arête de la plaquette (25).

9. Outil d'alésage (21) avec l'agencement de guide (23) selon la revendication 1, **caractérisé en ce que** l'agencement de guide comprend un filetage (49) disposé autour d'au moins une partie (43) de la petite extrémité (33) de l'élément de serrage (31) s'étendant au-delà de la deuxième surface de la plaquette (25).

10. Outil d'alésage (21) avec l'agencement de guide (23) selon la revendication 9, **caractérisé en ce que** la partie de la petite extrémité (33) de l'élément de serrage (31) comprend un filetage externe qui s'accouple avec le filetage (49).

11. Outil d'alésage (21) avec l'agencement de guide (23) selon la revendication 1, **caractérisé en ce que** la surface de guidage (27) définit une surface de guidage circonférentiel, la plaquette (25) comprenant une surface d'arête (55) entre la surface de guidage circonférentiel et la surface (41) opposée, la surface d'arête comprenant une surface de guidage axial.

12. Outil d'alésage (21) avec l'agencement de guide (23) selon la revendication 11, **caractérisé en ce que** la plaquette (25) comprend un chanfrein (57) entre la surface de guidage circonférentiel et la surface de guidage axial.
